Europäisches Patentamt

European Patent Office

Office européen des brevets

(19)

(11) Veröffentlichungsnummer: **0 314 965 B1**

# EUROPÄISCHE PATENTSCHRIFT

(12)

(45) Veröffentlichungstag der Patentschrift:
06.03.91 Patentblatt 91/10

(51) Int. Cl.$^5$: **F16L 3/12**

(21) Anmeldenummer: 88117183.9

(22) Anmeldetag: 15.10.88

(54) **Halteklammer zur Befestigung von Kabeln oder Kabelbündeln.**

(30) Priorität: 02.11.87 DE 3737113

(43) Veröffentlichungstag der Anmeldung:
10.05.89 Patentblatt 89/19

(45) Bekanntmachung des Hinweises auf die
Patenterteilung:
06.03.91 Patentblatt 91/10

(84) Benannte Vertragsstaaten:
DE ES FR GB IT

(56) Entgegenhaltungen:
FR-A- 2 599 809
US-A- 3 980 263
US-A- 3 991 960

(73) Patentinhaber: A. Raymond KG
Teichstrasse 57
W-7850 Lörrach (DE)

(72) Erfinder: Jünemann, Dietrich
Scherrbrunnenweg 7
W-7850 Lörrach (DE)
Erfinder: Hänsel, Mathias
Im Maiacker 12
W-7842 Kandern 3 (DE)
Erfinder: Schneider, Wolfgang
Röttlerweg 11
W-7842 Kandern-Wollbach (DE)

(74) Vertreter: Kirchgaesser, Johannes, Dipl.-Ing.
p/a Fa. A. RAYMOND KG, Teichstrasse 57
W-7850 Lörrach (DE)

## Beschreibung

Die Erfindung bezieht sich auf eine Halteklammer aus hartelastischem Kunststoff und dient zur Befestigung von länglichen Bauteilen mit unterschiedlichen Durchmessern wie Kabel oder Kabelbündel auf Trägerplatten. Die Halteklammer besteht hierbei aus einer mit einem Befestigungselement versehenen Grundplatte und sich vom Rand der Grundplatte erhebenden, den Halteraum U-förmig umgebenden Seitenwänden, an deren freien Enden jeweils eine den Öffnungsbereich abdeckende Wand mit in der anderen wand verhakbaren Rastkanten angeformt ist, welche sich im eingerasteten Zustand unter Vorspannung hintergreifen (vgl. DE-A-34 03 330).

Bei einer bekannten Klammer dieser Art sind zwei federnde, bandartige Abdeckwände vorgesehen, von denen eine vom oberen Rand der Seitenwand etwa parallel zur Grundplatte absteht, während die andere Abdeckwand mit der gegenüberliegenden Seitenwand durch einen dünnen, biegsamen Abschnitt verbunden ist und im Anlieferungszustand senkrecht hochsteht, so daß die Kabel durch die freie Öffnung in den Halteraum eingelegt werden können. Nach dem Einlegen der Kabel wird die hochstehende Abdeckwand heruntergeschwenkt. Gleichzeitig wird die elastische Seitenwand so weit nach außen gebogen, bis die Rastkante an der gegenüberliegenden Rastkante vorbeigeht und mit dieser nach dem Zurückfedern der Seitenwand in Eingriff gebracht werden kann.

Bei diesem Kabelhalter wird es als Nachteil empfunden, daß zum Verschließen wie auch zum Öffnen des Halters besondere Handgriffe und Geschicklichkeit erforderlich sind, um die Eingreifvorsprünge zusammenzubringen oder aber zu lösen, falls noch Kabel nachgelegt werden sollen. Aufgabe der Erfindung ist es daher, die vorgenannte Halteklammer so zu gestalten, daß die Kabel ohne zusätzliche Handgriffe an den Schließelementen schnell und einfach in den Halteraum eingedrückt werden können und die einmal eingedrückten Kabel absolut sicher gehalten werden.

Zur Lösung dieser Aufgabe werden die im Anspruch angegebenen Maßnahmen vorgeschlagen, wobei durch die erfindungsgemäße Ausbildung und Anordnung der Abdeckwände folgende Vorteile erreicht werden :

Die quer über der Öffnung liegende Abdeckwand wird beim Einlegen eines Kabels von diesem gleichzeitig heruntergebogen und federt automatisch in die Schließposition zurück, sobald das Kabel zwischen den beiden Abdeckwänden hindurch in den Halteraum gelangt ist. Der Verschluß ist absolut sicher, da die Rastkanten aufgrund der Rückstellkraft zwangsläufig im Eingriff bleiben und die schräg in den Halteraum weisenden Abdeckwände sich einer auf das Kabel eventuell einwirkenden Zugkraft widersetzen. Andererseits ist das Nachlegen weiterer Kabel, sofern im Halteraum noch Platz vorhanden ist, durchaus möglich, da sich der Verschluß beim Eindrücken der Abdeckwand ohne weiteres öffnet und beim Zurückfedern wieder einrastet.

In der Zeichnung ist ein Ausführungsbeispiel der Erfindung dargestellt und soll nachfolgend näher erläutert werden. Es zeigt

Fig. 1 eine Halteklammer in Seitenansicht im Anlieferungszustand,

Fig. 2 eine auf einer Trägerplatte montierte Halteklammer vor dem Eindrücken eines Kabels,

Fig. 3 die Halteklammer während des Eindrückens des Kabels,

Fig. 4 die Halteklammer im eingerasteten Zustand nach dem Eindrücken des Kabels und

Fig. 5 die gleiche Halteklammer nach dem Eindrücken eines stärkeren Kabels.

Die in den Figuren dargestellte Halteklammer besteht im wesentlichen aus einer Grundplatte 1 und mit dieser U-förmig verbundenen Seitenwänden 2 und 3 mit in den Innenraum ragenden, elastisch aufweitbaren Federarmen 4 und 5, welche sich dem Durchmesser der jeweils eingelegten Kabel oder Kabelbündel elastisch anpassen. Die Federarme 4 und 5 sind zu diesem Zweck in der unteren Hälfte des Halteraums an den Seitenwänden 2 und 3 angeformt und zunächst dicht an den Seitenwänden entlang hochgeführt bis kurz unterhalb der nachfolgend beschriebenen Abdeckwände 6 und 8, von wo sie nach einem kurzen Wendebogen schräg zur Mitte bis dicht über die Grundplatte 1 heruntergeführt sind.

Am freien Ende der linken Seitenwand 2 ist eine schräg in den Innenraum gerichtete Abdeckwand 6 mit einem relativ biegesteifen Wandquerschnitt angeformt, welche etwa zur Hälfte die Öffnung 7 zwischen den beiden Seitenwänden 2 und 3 abdeckt und am unteren Ende eine Rastkante 11 aufweist. Am freien Ende der rechten Seitenwand 3 ist bei 10 ebenfalls eine Abdeckwand 8 angeformt, welche aber im Vergleich zur ersteren Abdeckwand 6 biegeelastisch ausgebildet ist und quer über der Öffnung 7 liegt und dabei die gegenüberliegende Abdeckwand 6 teilweise überdeckt. Diese Abdeckwand 8 weist an ihrem freien Ende eine abgewinkelte Rastkante 9 auf, welche im eingedrückten Zustand der Abdeckwand 8 die Rastkante 11 der Abdeckwand 6 unter Vorspannung hintergreift und damit ein unbeabsichtigtes Heraustreten der eingelegten Kabel 17 unmöglich macht.

Zur Befestigung der Halteklammer auf einer Trägerplatte 13 ist die Grundplatte 1 mit einem Befestigungselement 12 versehen, welches im vorliegenden Ausführungsbeispiel aus zwei zusammendrückbaren Federbeinen 13 und einem Stützschirm 14 besteht und in einem Loch 16 der Trägerplatte 15 in bekannter Weise verankerbar ist. Es versteht sich, daß anstelle des gezeigten Befestigungselementes auch andere bekannte Verankerungsmittel wie Spreizniete, Schrauben-oder Bolzenverbindungen verwendet werden können.

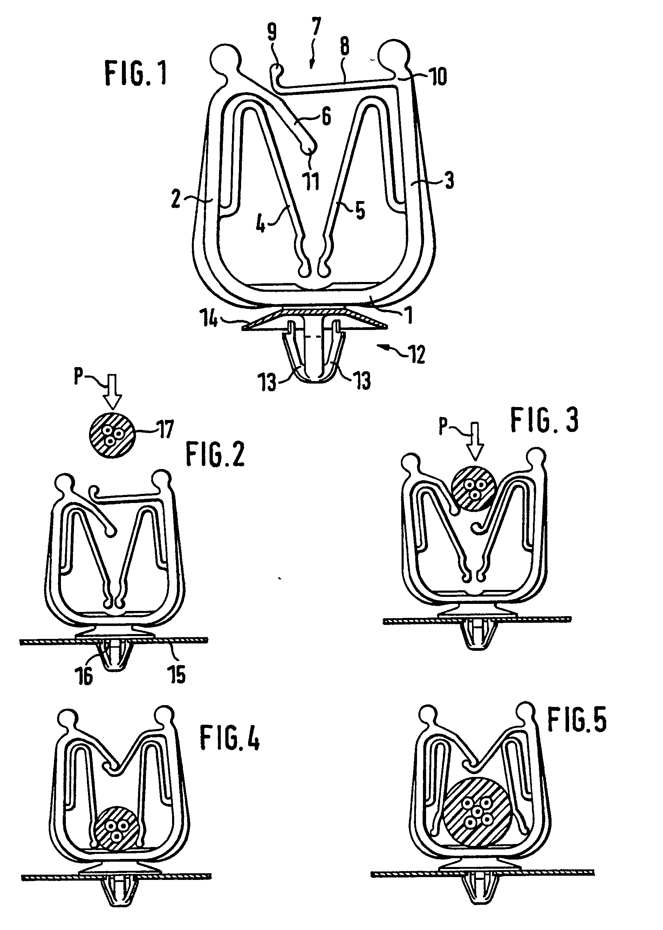

In den Figuren 2 bis 4 ist die Montagefolge für ein Kabel 17 mit relativ dünnem Kabelquerschnitt gezeigt. In Figur 2 befindet sich das Kabel 17 über der Abdeckwand 8 und wird in Richtung des Pfeiles "P" niedergedrückt. Hierbei weicht die Abdeckwand 8 elastisch nach unten und seitlich aus und wirkt dabei wie eine Einführwand. Gleichzeitig werden durch die sich auf der Abdeckwand 6 abstützende und über diese nach unten gleitende Rastkante 9 die Seitenwände 2 und 3, wie in Fig. 3 ersichtlich, nach außen gedrückt. Sobald das Kabel 17 die unterste Stelle zwischen der Rastkante 11 und der Rastkante 9 passiert hat, federn die Seitenwände 2 und 3 wieder in ihre Ausgangslage zurück, während die Abdeckwand 8 gleichzeitig hochschnellt und dabei die Rastkante 9 die Rastkante 11 der Abdeckwand 6 hintergreift. Hierdurch wird die Öffnung 7 fest verschlossen, so daß kein Kabel mehr von selbst heraustreten kann.

Selbstverständlich kann die Abdeckwand 8 von Hand wieder ausgehakt werden, wenn ein Kabel herausgeholt werden soll. Auch kann, sofern im Halteraum noch genügend Platz vorhanden ist, ein weiteres Kabel nachgedrückt werden, wobei sich die Abdeckwand 8 nach innen von selbst aushakt und nach dem Zurückfedern wieder einrastet.

## Ansprüche

1. Halteklammer aus hartelastischem Kunststoff zur Befestigung von länglichen Bauteilen mit unterschiedlichen Durchmessern wie Kabel oder Kabelbündel auf Trägerplatten, bestehend aus einer mit einem Befestigungselement versehenen Grundplatte (1) und sich vom Rand der Grundplatte erhebenden, den Halteraum U-förmig umgebenden Seitenwänden (2, 3), an deren freien Enden jeweils eine den Öffnungsbereich abdeckende Wand (6, 8) mit in der anderen Wand verhakbaren Rastkanten angeformt ist, welche sich im eingerasteten Zustand unter Vorspannung hintergreifen, dadurch gekennzeichnet, daß die eine Abdeckwand (6) relativ biegesteif ausgebildet und schräg in den Halteraum gerichtet ist, während die andere Abdeckwand (8) biegeelastisch ausgebildet ist und im Anlieferungszustand – in Eindrückrichtung gesehen – quer über der Öffnung (7) liegt und dabei die gegenüberliegende Abdeckwand (6) teilweise überdeckt.

## Claims

1. A retaining clip of rigidly elastic synthetic plastics material, for attaching elongated components of different diameters, such as cables or bundles of cables, on supporting plates, consisting of a base plate (1) provided with a fixing element and, extending away from the edge of the base plate and surrounding the retention space in a U-shaped fashion, side walls (2, 3) having at their respective free ends and masking the area of the opening, a locking edge which is formed on one wall and which is adapted to engage the other wall, the locking edges being adapted to engage one behind the other in a pre-stressed manner when in the engaged condition, characterised in that one cover wall (6) is relatively flexurally rigid and is directed obliquely into the retention space, while the other cover wall (8) is flexurally resilient and, in the state in which it is supplied – viewed in the pressing-in direction – is situated transversely over the opening (7), in which it partially covers the oppositely disposed cover wall (6).

## Revendications

1. Agrafe de retenue réalisée en matière plastique à cédage élastique dur pour la fixation de composants de grande longueur par rapport à leur section et de diamètres différents, tels que des câbles ou des faisceaux de câbles, sur des plaques support, se composant d'une partie inférieure formant assise (1) munie d'un organe de fixation et de parois latérales (2, 3) partant de l'assise et délimitant une emprise de retenue en forme de U, comportant respectivement chacune, au niveau de leur extrémité, rendues solidaires de celles-ci par moulage, des parois recouvrant l'ouverture de passage (6, 8) munies d'ergots d'encastrement qui viennent s'accrocher sur la paroi opposée et qui, à l'état, d'accrochage, exercent un effort de cramponnage par derrière se caractérisant par le fait que l'une de ces parois de recouvrement (6) a une configuration qui la rend peu susceptible de se déformer par flexion et fait saillie sous une orientation oblique dans l'emprise de retenue, cependant que l'autre paroi de recouvrement (8) a une configuration qui lui permet de fléchir par déformation élastique et, à l'état de livraison de l'agrafe (et lors qu'on regarde celle-ci dans le sens de l'introduction par pression des composants à fixer) se trouve disposée au-dessus de l'ouverture (7), recouvrant partiellement en l'occurrence la paroi de recouvrement opposée (6).

FIG. 1

FIG. 2

FIG. 3

FIG. 4

FIG. 5